# EUROPÄISCHE PATENTSCHRIFT

(11) **EP 3 942 379 B1**
(45) Veröffentlichungstag und Bekanntmachung des Hinweises auf die Patenterteilung: **26.04.2023**
(21) Anmeldenummer: 20709167.9
(22) Anmeldetag: 04.03.2020
(51) Int. Cl.: G06N 3/08, G05D 1/02, G06N 3/00

(54) **VERFAHREN ZUM TRAINIEREN WENIGSTENS EINES ALGORITHMUS FÜR EIN STEUERGERÄT EINES KRAFTFAHRZEUGS, COMPUTERPROGRAMMPRODUKT, KRAFTFAHRZEUG SOWIE SYSTEM**
METHOD FOR TRAINING AT LEAST ONE ALGORITHM FOR A CONTROL UNIT OF A MOTOR VEHICLE, COMPUTER PROGRAM PRODUCT, MOTOR VEHICLE AND SYSTEM
PROCÉDÉ POUR L'ENTRAÎNEMENT D'AU MOINS UN ALGORITHME POUR UN APPAREIL DE COMMANDE D'UN VÉHICULE AUTOMOBILE, PRODUIT DE PROGRAMME INFORMATIQUE, VÉHICULE AUTOMOBILE AINSI QUE SYSTÈME

(30) Priorität: 19.03.2019 DE 102019203712
(43) Veröffentlichungstag der Anmeldung: 26.01.2022
(73) Patentinhaber: PSA Automobiles SA, 78300 Poissy (FR)
(72) Erfinder: EBERLE, Ulrich, 65428 Rüsselsheim am Main (DE); HALLERBACH, Sven, 65428 Rüsselsheim am Main (DE)
(74) Vertreter: Spitzfaden, Ralf
(86) Internationale Anmeldenummer: PCT/EP2020/055625
(87) Internationale Veröffentlichungsnummer: WO 2020/187563

(56) Entgegenhaltungen:
- CN-A- 109 324 539
- WOLF PETER ET AL: "Learning how to drive in a real world simulation with deep Q-Networks", 2017 IEEE INTELLIGENT VEHICLES SYMPOSIUM (IV), IEEE, 11. Juni 2017 (2017-06-11), Seiten 244-250, XP033133715, DOI: 10.1109/IVS.2017.7995727 [gefunden am 2017-07-28]
- XINLEI PAN ET AL: "Virtual to Real Reinforcement Learning for Autonomous Driving", PROCEDINGS OF THE BRITISH MACHINE VISION CONFERENCE 2017, 26. September 2017 (2017-09-26), XP055610078, DOI: 10.5244/C.31.11 ISBN: 978-1-901725-60-5
- ALEX KENDALL ET AL: "Learning to Drive in a Day", ARXIV.ORG, CORNELL UNIVERSITY LIBRARY, 201 OLIN LIBRARY CORNELL UNIVERSITY ITHACA, NY 14853, 2. Juli 2018 (2018-07-02), XP081197602,

## Beschreibung

Vorliegend werden ein Verfahren zum Trainieren wenigstens eines Algorithmus für ein Steuergerät eines Kraftfahrzeugs, ein Computerprogrammprodukt, ein Kraftfahrzeug sowie ein System beschrieben.

Verfahren, Computerprogrammprodukte, Kraftfahrzeuge sowie Systeme der eingangs genannten Art sind im Stand der Technik bekannt. Die ersten teil-automatisiert (entspricht SAE Level 2 gemäß SAE J3016) fahrenden Kraftfahrzeuge sind in den vergangenen Jahren zur Serienreife gelangt. Automatisiert (entspricht SAE Level >=3 gemäß SAE J3016) bzw. autonom (entspricht SAE Level 4/5 gemäß SAE J3016) fahrende Kraftfahrzeuge müssen anhand vielfältiger Vorgaben, zum Beispiel Fahrtziel und Einhaltung gängiger Verkehrsregeln, mit maximaler Sicherheit auf unbekannte Verkehrssituationen selbständig reagieren. Da die Verkehrswirklichkeit aufgrund der Unvorhersehbarkeit des Verhaltens anderer Verkehrsteilnehmer hoch komplex ist, gilt es als nahezu unmöglich, entsprechende Steuergeräte von Kraftfahrzeugen mit herkömmlichen Methoden und auf der Grundlage von menschengemachten Regeln zu programmieren.

Stattdessen ist es bekannt, mit Methoden des maschinellen Lernens bzw. der künstlichen Intelligenz Algorithmen zu entwickeln. Solche Algorithmen können einerseits maßvoller auf komplexe Verkehrssituationen reagieren als traditionelle Algorithmen. Andererseits ist es mithilfe künstlicher Intelligenz prinzipiell möglich, die Algorithmen während des Entwicklungsprozesses und im Alltag durch ständiges Lernen weiterzuentwickeln. Alternativ wird ein Stand nach der Beendigung der Trainingsphase im Entwicklungsprozess durch den Hersteller eingefroren.

Aus der DE 10 2006 044 086 A1 ist ein System zur virtuellen Simulation von Verkehrssituationen bekannt, mit einer Anzeigeeinheit zur bildhaften Anzeige der virtuellen Verkehrssituationen und einer Eingabeeinheit, und mit zumindest einem modellierten Referenzfahrzeug und zumindest einem weiteren modellierten Verkehrsteilnehmer, wobei das Referenzfahrzeug eine modellierte Detektionseinrichtung zur Erfassung der virtuellen Umgebung des Referenzfahrzeugs aufweist, und das Verhalten des Referenzfahrzeugs während einer simulierten Verkehrssituation zumindest zeitweise unter Berücksichtigung der durch die Detektionseinrichtung erfassten Informationen erfolgt.

Nachteilig hieran ist, dass das System rein virtuell trainiert wird. In der Realität haben die verwendeten Detektionseinrichtungen jedoch einerseits nicht modellierbare Eigenheiten, Toleranzen oder Verschleißerscheinungen, die bei rein virtuellen Trainingsverfahren nicht berücksichtigt werden können.

Aus WOLF PETER ET AL: "Learning how to drive in a real world simulation with deep Q-Networks", 2017 IEEE INTELLIGENT VEHICLES SYMPOSIUM (IV), IEEE, 11. June 2017 ist ein Verfahren zum Trainieren wenigstens eines Algorithmus für ein Steuergerät eines Kraftfahrzeugs bekannt, wobei das Steuergerät zur Umsetzung einer autonomen Fahrfunktion vorgesehen ist. Der Algorithmus kann mit einem selbstlernenden neuronalen Netz als ein Computerprogrammproduktmodul bereitgestellt werde, das in einem Steuergerät des Kraftfahrzeugs eingebettet wird. Der Algorithmus wird durch Selbstlernen im Kraftfahrzeug trainiert.

Die CN 109 324 539 A offenbart ein Verfahren womit eine Simulation von für die autonome Fahrfunktion relevanten kritischen Verkehrssituationen auf einem Testgelände durchgeführt wird, auf dem Realobjekte ferngesteuert bewegt werden.

Somit stellt sich die Aufgabe, Verfahren, Computerprogrammprodukte, Kraftfahrzeuge sowie Systeme der eingangs genannten Art dahingehend weiterzubilden, dass eine bessere Abstimmung eines trainierten Algorithmus auf reale Umfeldsensorik stattfinden kann.

Die Aufgabe wird gelöst durch ein Verfahren zum Trainieren wenigstens eines Algorithmus für ein Steuergerät eines Kraftfahrzeugs gemäß Anspruch 1, ein Computerprogrammprodukt gemäß dem nebengeordneten Anspruch 6, ein Kraftfahrzeug gemäß dem nebengeordneten Anspruch 8 sowie ein System gemäß dem nebengeordneten Anspruch 10. Weiterführende Ausgestaltungen und Weiterbildungen sind Gegenstand der abhängigen Ansprüche.

Nachfolgend wird ein Verfahren zum Trainieren wenigstens eines Algorithmus für ein Steuergerät eines Kraftfahrzeugs, wobei das Steuergerät zur Umsetzung einer autonomen Fahrfunktion unter Eingriff in Aggregate des Kraftfahrzeugs auf der Grundlage von Eingangsdaten unter Verwendung des wenigstens einen Algorithmus vorgesehen ist, wobei der Algorithmus durch ein selbstlernendes neuronales Netz trainiert wird, umfassend folgende Schritte:
a) Bereitstellen eines Computerprogrammproduktmoduls für die autonome Fahrfunktion, wobei das Computerprogrammproduktmodul den zu trainierenden Algorithmus und das selbstlernende neuronale Netz enthält;
b) Einbetten des trainierten Computerprogrammproduktmoduls in das Steuergerät des Kraftfahrzeugs, wobei
c) eine Simulation von für die autonome Fahrfunktion relevanten kritischen Verkehrssituationen auf einem Testgelände durchgeführt wird, auf dem Realobjekte ferngesteuert bewegt werden, und
d) der Algorithmus durch Selbstlernen im Kraftfahrzeug trainiert wird.

Die Realobjekte sind dabei an die Simulationsumgebung angeschlossen, wobei der Algorithmus in der Simulationsumgebung durch das Verhalten der Realobjekte trainiert wird.

Dadurch, dass das Training des Algorithmus auf einem Testgelände trainiert wird, auf dem Realobjekte ferngesteuert bewegt werden, kann eine sichere Umgebung geschaffen werden, in der der Algorithmus so naturgetreu wie möglich und ohne Gefährdung von Menschenleben trainiert werden kann. Das Ergebnis ist eine bessere Algorithmusqualität als ist mit herkömmlichen Verfahren möglich wäre.

In einer ersten weiterführenden Ausgestaltung kann vorgesehen sein, dass das Computerprogrammproduktmodul in eine Simulationsumgebung zur Simulation wenigstens einer für die autonome Fahrfunktion relevanten Verkehrssituation eingebettet wird, wobei die Simulationsumgebung auf Kartendaten des Testgeländes sowie auf einem digitalen Fahrzeugmodell des Kraftfahrzeugs basiert, wobei der Algorithmus durch Lernen in der Simulationsumgebung trainiert wird.

Hierdurch kann eine Rückkopplung zwischen der Simulation einerseits und dem realen Fahrmodell andererseits erzeugt werden. So kann das Verhalten des vom Algorithmus zu steuernden Kraftfahrzeugs in die Simulationsumgebung zurückgespielt werden, was dort zu einer präziseren Simulation des Verhaltens des Kraftfahrzeuges führt und damit eine virtuelle Simulation verbessert.

In einer weiteren weiterführenden Ausgestaltung kann vorgesehen sein, dass der Algorithmus in der Simulationsumgebung durch das Verhalten des Kraftfahrzeugs trainiert wird.

Des Weiteren ist eine Betrachtung des Kraftfahrzeugs in dem Simulationsmodell "von au-ßen" möglich, womit sich kooperative Effekte besser simulieren lassen als bei auf rein virtuellen Modellen basierenden Kraftfahrzeugen.

Des Weiteren ist somit umfangreiches Wissen über die komplette Umgebung des Kraftfahrzeugs, inklusive der umgebenden simulierten und ferngesteuerten realen Verkehrsobjekte sowie der Infrastruktur, erhältlich, welches zur Evaluierung des Algorithmus genutzt werden kann.

In einer weiteren weiterführenden Ausgestaltung kann vorgesehen sein, dass virtuelle Objekte in der Simulationsumgebung simuliert werden, wobei die Realobjekte auf die simulierten virtuellen Objekte reagieren und umgekehrt die virtuellen Objekte auf die Realobjekte reagieren.

Dies trägt bei zur Simulation von kausalen oder kooperativen Effekten, wie sie beispielsweise an einem Stauende oder an einer Kreuzung oder dergleichen vorkommen können.

In einer weiteren weiterführenden Ausgestaltung kann vorgesehen sein, dass die Realobjekte und/oder die virtuellen Objekte statisch oder dynamisch sind.

Entsprechende Realobjekte oder virtuelle Objekte können beispielsweise andere Kraftfahrzeuge oder sonstige Verkehrsteilnehmer wie Fahrradfahrer oder Fußgänger sein, es können jedoch auch bewegliche oder unbewegliche Objekte simuliert werden, beispielsweise Hindernisse.

Ein erster unabhängiger Gegenstand betrifft eine Vorrichtung zum Trainieren wenigstens eines Algorithmus für ein Steuergerät eines Kraftfahrzeugs, wobei das Steuergerät zur Umsetzung einer autonomen Fahrfunktion unter Eingriff in Aggregate des Kraftfahrzeugs auf der Grundlage von Eingangsdaten unter Verwendung des wenigstens einen Algorithmus vorgesehen ist, wobei selbstlernendes neuronales Netz zum Trainieren des Algorithmus vorgesehen ist, wobei die Vorrichtung:
a) Mittel zum Bereitstellen eines Computerprogrammproduktmoduls für die autonome Fahrfunktion aufweist, wobei das Computerprogrammproduktmodul den zu trainierenden Algorithmus und das selbstlernende neuronale Netz enthält;
b) Mittel zum Einbetten des trainierten Computerprogrammproduktmoduls in das Steuergerät des Kraftfahrzeugs aufweist;
c) Mittel zur Simulation von für die autonome Fahrfunktion relevanten kritischen Verkehrssituationen auf einem Testgelände durchgeführt wird, auf dem Realobjekte ferngesteuert bewegt werden, und
d) Mittel zum Trainieren des Algorithmus durch Selbstlernen im Kraftfahrzeug.

In einer ersten weiterführenden Ausgestaltung kann vorgesehen sein, dass die Vorrichtung Mittel zum Einbetten des Computerprogrammproduktmoduls in eine Simulationsumgebung zur Simulation wenigstens einer für die autonome Fahrfunktion relevanten Verkehrssituation aufweist, wobei die Simulationsumgebung auf Kartendaten des Testgeländes sowie auf einem digitalen Fahrzeugmodell des Kraftfahrzeugs basiert, wobei in der Simulationsumgebung Mittel zum Trainieren des Algorithmus vorgesehen sind.

In einer weiteren weiterführenden Ausgestaltung kann vorgesehen sein, dass Mittel zum Trainieren des Algorithmus in der Simulationsumgebung durch das Verhalten des Kraftfahrzeugs vorgesehen sind.

In einer weiteren weiterführenden Ausgestaltung kann vorgesehen sein, dass die Realobjekte an die Simulationsumgebung angeschlossen sind, wobei Mittel zum Trainieren des Algorithmus in der Simulationsumgebung durch das Verhalten der Realobjekte vorgesehen sind.

In einer weiteren weiterführenden Ausgestaltung kann vorgesehen sein, dass Mittel zum Simulieren von virtuellen Objekten in der Simulationsumgebung vorgesehen sind, wobei die Realobjekte dazu eingerichtet sind, auf die simulierten virtuellen Objekte zu reagieren, und umgekehrt.

In einer weiteren weiterführenden Ausgestaltung kann vorgesehen sein, dass die Realobjekte und/oder die virtuellen Objekte statisch oder dynamisch sind.

Ein weiterer unabhängiger Gegenstand betrifft ein Computerprogrammprodukt, mit einem computerlesbaren Speichermedium, auf dem Befehle eingebettet sind, die, wenn sie von einer Recheneinheit ausgeführt werden, bewirken, dass die Recheneinheit dazu eingerichtet ist, das Verfahren nach einem der vorangegangenen Ansprüche auszuführen.

Ein entsprechendes Computerprogrammprodukt ermöglicht die Bereitstellung eines sicheren, autonom fahrenden Kraftfahrzeugs, das auf vielfältige herausfordernde reale Verkehrssituationen sicher reagieren kann und gleichzeitig mit einer hohen Toleranz gegenüber den Sensoreingangssignalen ausgestattet ist.

In einer ersten weiterführenden Ausgestaltung kann vorgesehen sein, dass die Befehle das Computerprogrammproduktmodul der zuvor beschrieben Art aufweisen.

Hierdurch kann ein in-situ Training des Kraftfahrzeugs in einem sicheren Testgelände stattfinden.

Ein weiterer unabhängiger Gegenstand betrifft ein Kraftfahrzeug mit einer Recheneinheit und einem computerlesbaren Speichermedium, wobei auf dem Speichermedium ein Computerprogrammprodukt der zuvor beschriebenen Art gespeichert ist.

Ein entsprechendes Kraftfahrzeug weist eine hohe Qualität des Algorithmus zum autonomen Fahren auf.

In einer ersten weiterführenden Ausgestaltung kann vorgesehen sein, dass die Recheneinheit Bestandteil des Steuergeräts ist.

Hierdurch kann ein Training während des Betriebs des Kraftfahrzeugs im Alltagsverkehr weitergeführt werden, sodass sich der Algorithmus laufend weiter verbessert.

In einer anderen weiterführenden Ausgestaltung kann vorgesehen sein, dass die Recheneinheit mit Umgebungssensoren vernetzt ist.

Somit kann erreicht werden, dass der Algorithmus sich auf die individuellen Besonderheiten der Umgebungssensoren einstellen kann.

Ein weiterer unabhängiger Gegenstand betrifft ein System zum Trainieren wenigstens eines Algorithmus für ein Steuergerät eines Kraftfahrzeugs, wobei das Steuergerät zur Umsetzung einer autonomen Fahrfunktion unter Eingriff in Aggregate des Kraftfahrzeugs auf der Grundlage von Eingangsdaten unter Verwendung des wenigstens einen Algorithmus vorgesehen ist, wobei der Algorithmus durch ein selbstlernendes neuronales Netz trainiert wird, wobei das System eine Simulationsumgebung zur Simulation wenigstens einer für die autonome Fahrfunktion relevanten Verkehrssituation aufweist, wobei die Simulationsumgebung Kartendaten eines Testgeländes sowie ein digitales Fahrzeugmodell des Kraftfahrzeugs enthält, wobei das System Sensoren zur Erfassung von Daten betreffend Realobjekte auf dem Testgelände aufweist. Die Realobjekte sind an die Simulationsumgebung angeschlossen und werden ferngesteuert auf dem Testgelände bewegt. Ein Training des Algorithmus beruht auf erfassten Daten betreffend der Realobjekte.

Ein entsprechendes System erlaubt ein schnelles Trainieren eines sehr zuverlässigen Algorithmus zum Steuern eines autonom zu fahrenden Kraftfahrzeugs.

In einer ersten weiterführenden Ausgestaltung kann vorgesehen sein, dass die Simulationsumgebung zur Simulation virtueller Objekte und zur Übermittlung von Daten betreffend die virtuellen Objekte an den Algorithmus ausgebildet ist.

Durch die Simulation von virtuellen Objekten können Masseneffekte, zum Beispiel dichter Verkehr, besser dargestellt werden als bei realen Objekten. Des Weiteren können in entsprechenden Situationen besonders gefährdete Objekte, zum Beispiel Kraftfahrzeuge, die beim Trainieren einer Spurwechselfunktion neben dem autonom fahrenden Kraftfahrzeug fahren, simuliert werden, was Beschädigungen an beiden Kraftfahrzeugen, dem simulierten und dem realen, vermeidet.

Es zeigen schematisch:
- Fig. 1: ein Kraftfahrzeug, das zum autonomen Fahren eingerichtet ist;
- Fig. 2: ein Computerprogrammprodukt für das Kraftfahrzeug aus Fig. 1;
- Fig. 3: ein Testgelände mit dem Kraftfahrzeug aus Fig. 1, sowie
- Fig. 4: ein Ablaufdiagramm des Verfahrens.

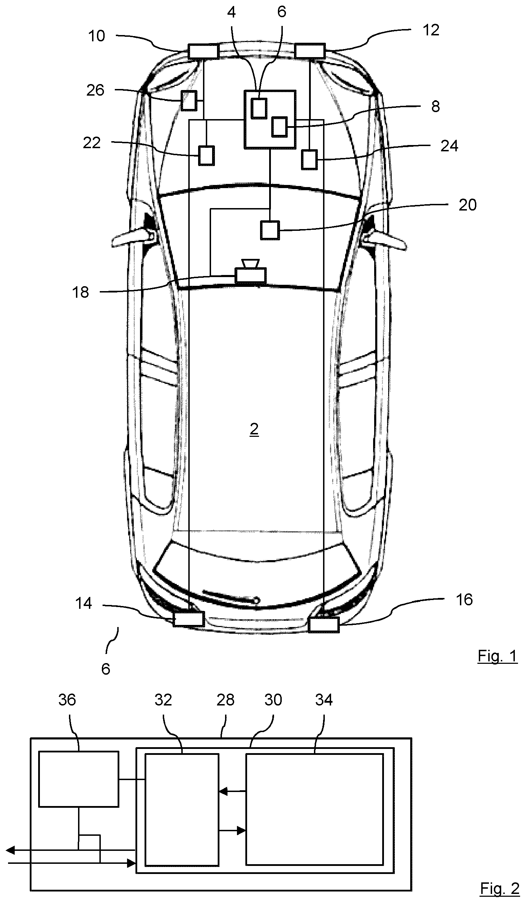

Fig. 1 zeigt ein Kraftfahrzeug 2, das zum autonomen Fahren eingerichtet ist.

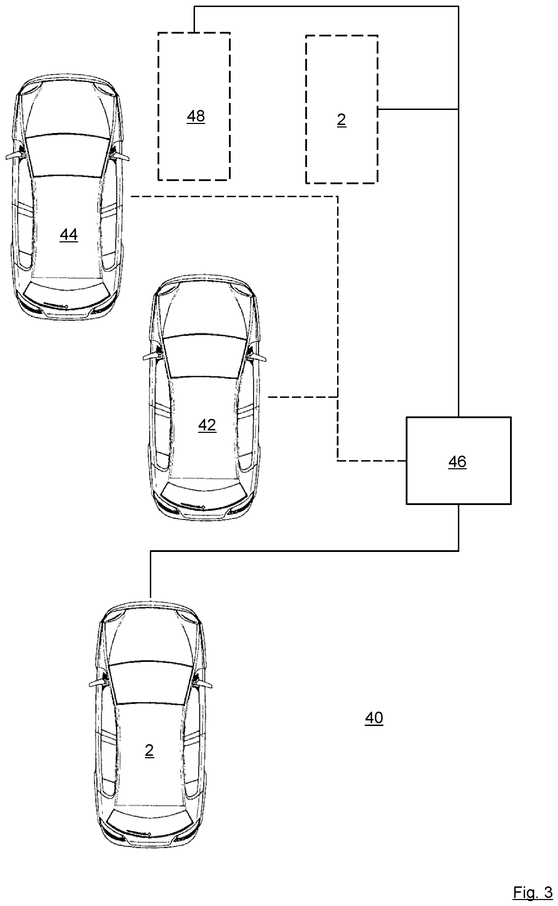

Das Kraftfahrzeug 2 weist ein Kraftfahrzeugsteuergerät 4 mit einer Recheneinheit 6 und einem Speicher 8 auf. Im Speicher 8 ist ein Computerprogrammprodukt gespeichert, dass im Nachfolgenden insbesondere im Zusammenhang Fig. 2 und Fig. 3 eingehender beschrieben ist.

Das Kraftfahrzeugsteuergerät 4 ist einerseits mit einer Reihe von Umgebungssensoren verbunden, die eine Erfassung der aktuellen Lage des Kraftfahrzeugs 2 sowie der jeweiligen Verkehrssituation erlauben. Hierzu zählen Umgebungssensoren 10,12 an der Front des Kraftfahrzeugs 2, Umgebungssensoren 14, 16 am Heck des Kraftfahrzeugs 2, eine Kamera 18 sowie ein GPS-Modul 20. Je nach Ausgestaltung können weitere Sensoren vorgesehen sein, zum Beispiel Raddrehzahlsensoren, Beschleunigungssensoren etc., die mit dem Kraftfahrzeugsteuergerät 4 verbunden sind.

Während des Betriebs des Kraftfahrzeugs 2 hat die Recheneinheit 6 das im Speicher 8 abgelegte Computerprogrammprodukt geladen und führt dieses aus. Auf der Grundlage eines Algorithmus und der Eingangssignale entscheidet die Recheneinheit 6 über die Steuerung des Kraftfahrzeugs 2, die die Recheneinheit 6 über Eingriff in die Lenkung 22, Motorsteuerung 24 sowie Bremsen 26 erreichen kann, die jeweils mit dem Kraftfahrzeugsteuergerät 4 verbunden sind.

Fig. 2 zeigt ein Computerprogrammprodukt 28 mit einem Computerprogrammproduktmodul 30.

Das Computerprogrammprodukt 30 weist ein selbstlernendes neuronales Netz 32 auf, das einen Algorithmus 34 trainiert. Das selbstlernende neuronale Netz 32 lernt nach Methoden des bestärkenden Lernens, d. h. das neuronale Netz 32 versucht durch Variation des Algorithmus 34, Belohnungen für ein verbessertes Verhalten entsprechend einer oder mehrerer Kriterien oder Maßstäbe, also für Verbesserungen des Algorithmus 34 zu erhalten. Alternativ können aber auch bekannte Lernverfahren des überwachten und unüberwachten Lernens, sowie Kombinationen dieser Lernverfahren verwendet werden.

Der Algorithmus 34 kann im Wesentlichen ein komplexer Filter mit einer Matrix aus Werten, oft Gewichte genannt, bestehen, die eine Filterfunktion definieren, die das Verhalten des Algorithmus 34 abhängig von Eingangsgrößen, welche vorliegend über die Umgebungssensoren 10 bis 20 aufgenommen werden, bestimmt und Steuersignale zur Steuerung des Kraftfahrzeugs 2 generiert.

Die Überwachung der Güte des Algorithmus 34 wird von einem weiteren Computerprogrammproduktmodul 36 vorgenommen, das Eingangsgrößen und Ausgangsgrößen überwacht, daraus Metriken ermittelt und die Einhaltung der Güte durch die Funktionen anhand der Metriken kontrolliert. Gleichzeitig kann das Computerprogrammproduktmodul 36 negative wie positive Belohnungen für das neuronale Netz 32 geben.

Fig. 3 zeigt ein Testgelände 40 mit dem Kraftfahrzeug 2 aus Fig. 1.

Das Kraftfahrzeug 2 fährt hinter zwei weiteren Kraftfahrzeugen 42, 44. Die Kraftfahrzeuge 42,44 werden von einer Simulationsumgebung 46 ferngesteuert.

Durch die Verwendung der realen Kraftfahrzeuge 42, 44 nehmen die Umgebungssensoren 10 bis 18 Daten auf, wie sie auch in der realen Welt vorkommen. Somit kann sichergestellt werden, dass die Umgebungssensoren 10 bis 18 unter allen Umständen und mit verschiedenen Kraftfahrzeugen als anderen Verkehrsteilnehmern zuverlässig funktionieren.

Die Simulationsumgebung 46 ist im Wesentlichen ein Rechenzentrum mit Fernsteuermitteln. In der Simulationsumgebung 46 sind Kartendaten betreffend das Testgelände 40 abgespeichert. Des Weiteren sind Simulationsdaten betreffend das Kraftfahrzeug 2 in der Simulationsumgebung 46 gespeichert.

Die Simulationsumgebung 46 simuliert auf dem Testgelände 40 des Weiteren virtuelle Objekte 48, 50, die vorliegend ebenfalls Kraftfahrzeuge darstellen. Hierdurch kann die Anzahl von Objekten, mit denen der Algorithmus 34 des neuronalen Netzes 32 trainiert wird, erhöht werden, ohne die Anzahl von realen, fern zu steuernden Objekten wie den Kraftfahrzeugen 42, 44 zu erhöhen. Des Weiteren können durch die virtuellen Objekte 48, 50 Massenverkehrseffekte wie beispielsweise das Entstehen von Stau besser simuliert werden.

Die Simulationsumgebung 46, die die Kraftfahrzeuge 42, 44 sowie die virtuellen Objekte 48, 50 steuert, kann entsprechende Daten betreffend die Kraftfahrzeuge 42, 44, aber insbesondere betreffend die virtuellen Objekte 48, 50 an das Kraftfahrzeug 2 spielen, sodass das neuronale Netz 32 die virtuellen Objekte 48, 50 als Objekte wahrnimmt.

Die Simulationsumgebung 46 kann des Weiteren das Verhalten des Kraftfahrzeugs 2 analysieren und zur Verbesserung eines Simulationsalgorithmus sowie des Algorithmus 34 verwenden.

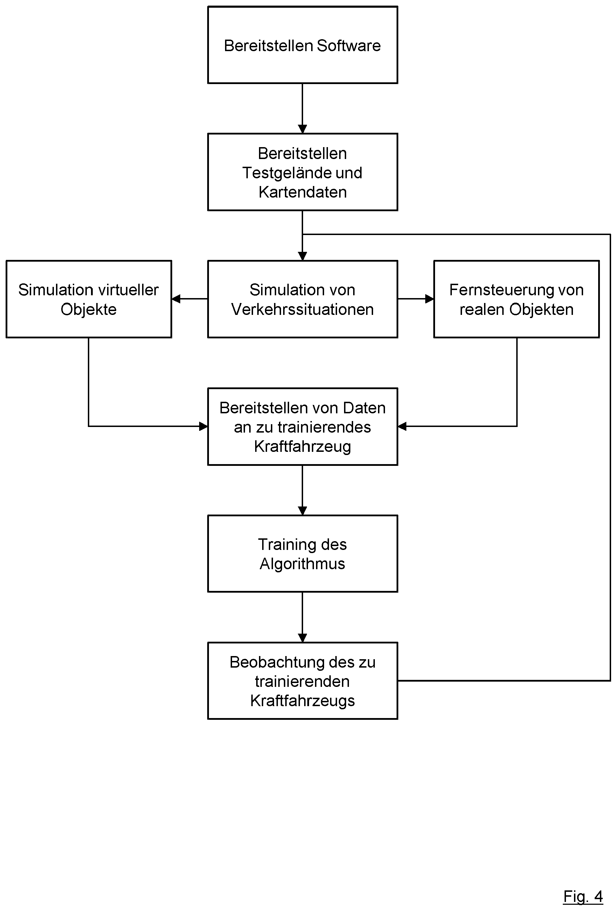

Fig. 4 zeigt ein Ablaufdiagramm des Verfahrens zum Trainieren eines Algorithmus.

In einem ersten Schritt wird das Computerprogrammprodukt (Software) auf dem Steuergerät des Kraftfahrzeugs bereitgestellt.

In einem darauffolgenden Schritt wird ein Testgelände bereitgestellt, wobei Kartendaten betreffend das Testgelände für die Simulationsumgebung bereitgestellt werden.

Sodann werden verschiedene Verkehrssituationen simuliert, indem reale Objekte auf dem Testgelände ferngesteuert werden und virtuelle Objekte simuliert werden.

Die entsprechenden Daten werden anders zum trainierenden Kraftfahrzeug übermittelt bzw. in Bezug auf die Realobjekte vom zu trainierenden Kraftfahrzeug erfasst.

Sodann wird der Algorithmus im Steuergerät des Kraftfahrzeugs auf der Grundlage der gestellten Situationen trainiert.

Durch Beobachtung des zu trainierenden Fahrzeuges und Rückkopplung an die Simulationsumgebung können die entsprechenden Informationen verwertet werden, um die Simulation zu beeinflussen.

Mithilfe des hier beschriebenen Verfahrens können eine Vielzahl von unterschiedlichen Verkehrsteilnehmern abgebildet werden, zum Beispiel Autos, Lkws, Motorräder, Fahrradfahrer, Fußgänger. Ebenso kann reale Infrastruktur, zum Beispiel Schilder, Ampeln, Straßensymbolen, Leitlinien etc. dargestellt werden.

Durch die Mischung von virtueller Realität und realen Verkehrsteilnehmern können hochkooperative Phänomene mit hohem Realitätsgehalt adressiert werden. So kann beispielsweise ein Entstehendes Stauende simuliert werden. Auch vom zu trainierenden Kraftfahrzeug weiter entfernte Verkehrsteilnehmer können als rein virtuelle Objekte dargestellt werden.

Durch die Verwendung von virtuellen und realen Verkehrsteilnehmern können kritische Grenzfälle früher und schneller untersucht werden. Der Algorithmus kann früher lernen, mit solchen Grenzfällen umzugehen. Durch die Verwendung von ferngesteuerten und simulierten Objekten, kann verhindert werden, dass anderen menschlichen oder tierischen Verkehrsteilnehmern auf dem Testgelände Schaden zukommt.

Mithilfe des Verfahrens können Komplexe Verkehrsmanöver im Rahmen der kooperativen Mobilität realistisch untersucht werden, zum Beispiel Auffahren auf einer Autobahn und Kommunikation zwischen den Verkehrsteilnehmern, um beispielsweise eine einfache Lücke für das aufzufahrenden Kraftfahrzeugs zu schaffen.

Kraftfahrzeuge, die sich in einem Kollisionsbereich mit dem trainierenden Kraftfahrzeug befinden können zur Vermeidung von Beschädigungen ebenfalls simuliert werden.

Die somit gewonnenen Erfahrungen können ebenfalls in der Simulationsumgebung verwendet werden, um neue Algorithmen schneller und besser trainieren zu können.

Zudem kann die beschriebene Simulationsumgebung mit simulierten und ferngesteuerten realen Objekten nach Abschluss der Trainingsphase für Test und Validation eines finalen Algorithmus verwendet werden.

Weiterhin findet die Simulationsumgebung und das hier beschriebene Verfahren ebenfalls Anwendung, wenn im Fahrzeug mehrere Steuergeräte mit einem jeweiligen Algorithmus sich die Aufgaben im Sinne des eingeführten Prinzips der Robotik "Sense-Plan-Act" bezüglich Umfeld-Perzeption, Planung und Ausführung der Fahraufgabe teilen.

### Bezugszeichenliste

- 2: Kraftfahrzeug
- 4: Kraftfahrzeugsteuergerät
- 6: Recheneinheit
- 8: Speicher
- 10: Umgebungssensor
- 12: Umgebungssensor
- 14: Umgebungssensor
- 16: Umgebungssensor
- 18: Kamera
- 20: GPS-Modul
- 22: Lenkung
- 24: Motorsteuerung
- 26: Bremsen
- 28: Computerprogrammprodukt
- 30: Computerprogrammproduktmodul
- 32: neuronales Netz
- 34: Algorithmus
- 36: Computerprogrammproduktmodul
- 40: Testgelände
- 42: Kraftfahrzeug
- 44: Kraftfahrzeug
- 46: Simulationsumgebung
- 48: virtuelles Objekt
- 50: virtuelles Objekt

## Patentansprüche

1. Verfahren zum Trainieren wenigstens eines Algorithmus (34) für ein Steuergerät (4) eines Kraftfahrzeugs (2), wobei das Steuergerät (4) zur Umsetzung einer autonomen Fahrfunktion unter Eingriff in Aggregate (22, 24, 26) des Kraftfahrzeugs (2) auf der Grundlage von Eingangsdaten unter Verwendung des wenigstens einen Algorithmus (34) vorgesehen ist, wobei der Algorithmus (34) durch ein selbstlernendes neuronales Netz (32) trainiert wird, umfassend folgende Schritte:
a) Bereitstellen eines Computerprogrammproduktmoduls (30) für die autonome Fahrfunktion, wobei das Computerprogrammproduktmodul (30) den zu trainierenden Algorithmus (34) und das selbstlernende neuronale Netz (32) enthält;
b) Einbetten des trainierten Computerprogrammproduktmoduls (30) in das Steuergerät (4) des Kraftfahrzeugs (2), **dadurch gekennzeichnet, dass**
c) eine Simulation von für die autonome Fahrfunktion relevanten kritischen Verkehrssituationen auf einem Testgelände (40) durchgeführt wird, auf dem Realobjekte (42, 44) ferngesteuert bewegt werden, und
d) der Algorithmus (34) durch Selbstlernen im Kraftfahrzeug (2) trainiert wird, wobei die Realobjekte (42, 44) an die Simulationsumgebung (46) angeschlossen sind, wobei der Algorithmus (34) in der Simulationsumgebung (46) durch das Verhalten der Realobjekte (42, 44) trainiert wird.

2. Verfahren nach Anspruch 1, wobei das Computerprogrammproduktmodul (30) in eine Simulationsumgebung (46) zur Simulation wenigstens einer für die autonome Fahrfunktion relevanten Verkehrssituation eingebettet wird, wobei die Simulationsumgebung (46) auf Kartendaten des Testgeländes (40) sowie auf einem digitalen Fahrzeugmodell des Kraftfahrzeugs (2) basiert, wobei der Algorithmus (34) durch Lernen in der Simulationsumgebung (46) trainiert wird.

3. Verfahren nach Anspruch 2, wobei der Algorithmus (34) in der Simulationsumgebung (46) durch das Verhalten des Kraftfahrzeugs (2) trainiert wird.

4. Verfahren nach einem der vorstehenden Ansprüche, wobei virtuelle Objekte (48, 50) in der Simulationsumgebung (46) simuliert werden, wobei die Realobjekte (42, 44) auf die simulierten virtuellen Objekte (48, 50) reagieren und umgekehrt die virtuellen Objekte (48, 50) auf die Realobjekte (42,44) reagieren.

5. Verfahren nach einem der vorangegangenen Ansprüche, wobei die Realobjekte (42, 44) und/oder die virtuellen Objekte (48, 50) statisch oder dynamisch sind.

6. Computerprogrammprodukt, mit einem computerlesbaren Speichermedium (8), auf dem Befehle eingebettet sind, die, wenn sie von einer Recheneinheit (6) ausgeführt werden, bewirken, dass die Recheneinheit (6) dazu eingerichtet ist, das Verfahren nach einem der vorangegangenen Ansprüche auszuführen.

7. Computerprogrammprodukt nach Anspruch 6, wobei die Befehle das Computerprogrammproduktmodul (30) nach einem der Ansprüche 1 bis 6 aufweisen.

8. Kraftfahrzeug mit einer Recheneinheit (6) und einem computerlesbaren Speichermedium (8), wobei auf dem Speichermedium (8) ein Computerprogrammprodukt nach Anspruch 7 oder 8 gespeichert ist.

9. Kraftfahrzeug (2) nach Anspruch 8, wobei die Recheneinheit (6) Bestandteil des Steuergeräts (4) ist.

10. Kraftfahrzeug nach einem der Ansprüche 8 oder 9, wobei die Recheneinheit (6) mit Umgebungssensoren (10, 12, 14, 16, 18) vernetzt sind.

11. System zum Trainieren wenigstens eines Algorithmus (34) für ein Steuergerät (4) eines Kraftfahrzeugs (2), wobei das Steuergerät (4) zur Umsetzung einer autonomen Fahrfunktion unter Eingriff in Aggregate (22, 24, 26) des Kraftfahrzeugs (2) auf der Grundlage von Eingangsdaten unter Verwendung des wenigstens einen Algorithmus (34) vorgesehen ist, wobei der Algorithmus (34) durch ein selbstlernendes neuronales Netz (32) trainierbar ist, wobei das System eine Simulationsumgebung (46) zur Simulation wenigstens einer für die autonome Fahrfunktion relevanten Verkehrssituation aufweist, wobei die Simulationsumgebung (46) Kartendaten eines Testgeländes (40) sowie ein digitales Fahrzeugmodell des Kraftfahrzeugs (2) enthält, wobei das System Sensoren (10, 12, 14, 16, 18) zur Erfassung von Daten betreffend Realobjekte (42, 44) auf dem Testgelände (40) aufweist, **dadurch gekennzeichnet, dass** die Realobjekte (42, 44) an die Simulationsumgebung (46) angeschlossen sind und ferngesteuert auf dem Testgelände bewegt werden, ein Training des Algorithmus (34) auf erfassten Daten betreffend der Realobjekte (42, 44) beruht.

12. System nach Anspruch 11, wobei die Simulationsumgebung (46) zur Simulation virtueller Objekte (48, 50) und zur Übermittlung von Daten betreffend die virtuellen Objekte (48, 50) an den Algorithmus (34) ausgebildet ist.

## Claims

1. A method for training at least one algorithm (34) for a control unit (4) of a motor vehicle (2), the control unit (4) for implementing an autonomous driving function by intervening in units (22, 24, 26) of the motor vehicle ( 2) is provided on the basis of input data using the at least one algorithm (34), the algorithm (34) being trained by a self-learning neural network (32), comprising the following steps:
a) providing a computer program product module (30) for the autonomous driving function, the computer program product module (30) containing the algorithm (34) to be trained and the self-learning neural network (32);
b) embedding the trained computer program product module (30) in the control unit (4) of the motor vehicle (2), **characterized in that**
c) a simulation of critical traffic situations relevant to the autonomous driving function is carried out on a test site (40) on which real objects (42, 44) are moved by remote control, and
d) the algorithm (34) is trained by self-learning in the motor vehicle (2), with the real objects (42, 44) being connected to the simulation environment (46), with the algorithm (34) in the simulation environment (46) being Behavior of the real objects (42, 44) is trained.

2. The method according to claim 1, wherein the computer program product module (30) is embedded in a simulation environment (46) for simulating at least one traffic situation relevant to the autonomous driving function, the simulation environment (46) being based on map data of the test site (40) and based on a digital vehicle model of the motor vehicle (2), the algorithm (34) being trained by learning in the simulation environment (46).

3. The method according to claim 2, wherein the algorithm (34) in the simulation environment (46) is trained by the behavior of the motor vehicle (2).

4. Method according to one of the preceding claims, wherein virtual objects (48, 50) are simulated in the simulation environment (46), the real objects (42, 44) reacting to the simulated virtual objects (48, 50) and conversely, the virtual objects (48, 50) react to the real objects (42,44).

5. The method according to any one of the preceding claims, wherein the real objects (42, 44) and / or the virtual objects (48, 50) are static or dynamic.

6. Computer program product with a computer-readable storage medium (8) on which instructions are embedded which, when executed by a processing unit (6), cause the processing unit (6) to be set up to perform the method according to any one of the preceding claims to execute.

7. The computer program product of claim 6, wherein the instructions comprise the computer program product module (30) of any one of claims 1 to 6.

8. Motor vehicle with a computing unit (6) and a computer-readable storage medium (8), wherein a computer program product according to claim 7 or 8 is stored on the storage medium (8).

9. Motor vehicle (2) according to claim 8, wherein the computing unit (6) is part of the control unit (4).

10. Motor vehicle according to one of claims 8 or 9, wherein the computing unit (6) with environmental sensors (10, 12, 14, 16, 18) are networked.

11. System for training at least one algorithm (34) for a control unit (4) of a motor vehicle (2), the control unit (4) for implementing an autonomous driving function by intervening in units (22, 24, 26) of the motor vehicle (2) on the basis of input data using the at least one algorithm (34), the algorithm (34) being trainable by a self-learning neural network (32), the system having a simulation environment (46) for simulating at least one traffic situation relevant to the autonomous driving function, the simulation environment (46) containing map data of a test site (40) and a digital vehicle model of the motor vehicle (2), the system having sensors (10, 12, 14, 16, 18) for recording data relating to real objects (42, 44) on the test site (40), **characterized in that** the real objects (42, 44) are connected to the simulation environment (46) and are remotely controlled on de m test site are moved, a training algorithm-mus (34) on recorded data relating to the real objects (42, 44) is based.

12. System according to claim 11, wherein the simulation environment (46) is designed to simulate virtual objects (48, 50) and to transmit data relating to the virtual objects (48, 50) to the algorithm (34).

## Revendications

1. Procédé d'apprentissage d'au moins un algorithme (34) pour une unité de commande (4) d'un véhicule automobile (2), l'unité de commande (4) pour mettre en oeuvre une fonction de conduite autonome en intervenant dans des unités (22, 24, 26) du véhicule automobile (2) est fourni sur la base de données d'entrée à l'aide dudit au moins un algorithme (34), l'algorithme (34) étant entraîné par un réseau de neurones à auto-apprentissage (32), comprenant les étapes suivantes :
a) fournir un module produit programme informatique (30) pour la fonction de conduite autonome, le module produit programme informatique (30) contenant l'algorithme (34) à apprendre et le réseau neuronal d'auto-apprentissage (32) ;
b) embarquement du module de produit programme d'ordinateur entraîné (30) dans l'unité de commande (4) du véhicule automobile (2), **caractérisé en ce que**
c) une simulation de situations de circulation critiques concernant la fonction de conduite autonome est effectuée sur un site de test (40) sur lequel des objets réels (42, 44) sont déplacés par télécommande, et
d) l'algorithme (34) est entraîné par auto-apprentissage dans le véhicule automobile (2), les objets réels (42, 44) étant connectés à l'environnement de simulation (46), l'algorithme (34) étant dans l'environnement de simulation (46) étant le comportement des objets réels (42, 44) est formé.

2. Procédé selon la revendication 1, dans lequel le module produit programme d'ordinateur (30) est embarqué dans un environnement de simulation (46) pour simuler au moins une situation de circulation pertinente pour la fonction de conduite autonome, l'environnement de simulation (46) étant basé sur données cartographiques du site d'essai (40) et basées sur un modèle numérique de véhicule du véhicule automobile (2), l'algorithme (34) étant entraîné par apprentissage dans l'environnement de simulation (46).

3. Procédé selon la revendication 2, dans lequel l'algorithme (34) dans l'environnement de simulation (46) est entraîné par le comportement du véhicule automobile (2).

4. Procédé selon l'une des revendications précédentes, dans lequel des objets virtuels (48, 50) sont simulés dans l'environnement de simulation (46), les objets réels (42, 44) réagissant aux objets virtuels simulés (48, 50) et inversement, les objets virtuels (48, 50) réagissent aux objets réels (42, 44).

5. Procédé selon l'une quelconque des revendications précédentes, dans lequel les objets réels (42, 44) et/ou les objets virtuels (48, 50) sont statiques ou dynamiques.

6. Produit programme d'ordinateur avec un support de stockage lisible par ordinateur (8) sur lequel sont incorporées des instructions qui, lorsqu'elles sont exécutées par une unité de traitement (6), amènent l'unité de traitement (6) à être configurée pour exécuter le procédé selon n'importe quel l'une des revendications précédentes à exécuter.

7. Produit de programme informatique selon la revendication 6, dans lequel les instructions comprennent le module de produit de programme informatique (30) selon l'une quelconque des revendications 1 à 6.

8. Véhicule automobile avec une unité de calcul (6) et un support de stockage lisible par ordinateur (8), dans lequel un produit programme d'ordinateur selon la revendication 7 ou 8 est stocké sur le support de stockage (8).

9. Véhicule automobile (2) selon la revendication 8, dans lequel l'unité de calcul (6) fait partie de l'unité de commande (4).

10. Véhicule automobile selon l'une des revendications 8 ou 9, dans lequel l'unité de calcul (6) avec les capteurs d'environnement (10, 12, 14, 16, 18) sont en réseau.

11. Système d'apprentissage d'au moins un algorithme (34) pour une unité de commande (4) d'un véhicule automobile (2), l'unité de commande (4) pour mettre en oeuvre une fonction de conduite autonome en intervenant dans des unités (22, 24, 26) du véhicule à moteur (2) sur la base de données d'entrée à l'aide dudit au moins un algorithme (34), l'algorithme (34) pouvant être entraîné par un réseau neuronal d'auto-apprentissage (32), le système ayant un environnement de simulation (46) pour simuler au moins une situation de circulation pertinente pour la fonction de conduite autonome, l'environnement de simulation (46) contenant des données cartographiques d'un site de test (40) et un modèle numérique de véhicule du véhicule automobile (2), le système comportant des capteurs (10, 12, 14, 16, 18) pour enregistrer des données relatives à des objets réels (42, 44) sur le site de test (40), **caractérisé en ce que** les objets réels (42, 44) sont connectés à l'environnement de simulation (46) et sont télécommandé sur de m site de test sont déplacés, un algorithme d'apprentissage-mus (34) sur des données enregistrées relatives aux objets réels (42, 44) est basé.

12. Système selon la revendication 11, dans lequel l'environnement de simulation (46) est agencé pour simuler des objets virtuels (48, 50) et pour transmettre des données relatives aux objets virtuels (48, 50) à l'algorithme (34).
